## Europäisches Patentamt

## European Patent Office

## Office européen des brevets

(11) Numéro de publication: **0 209 409**
**B1**

# FASCICULE DE BREVET EUROPÉEN

(45) Date de publication du fascicule du brevet:
**13.09.89**

(51) Int. Cl.⁴: **A 47 J 36/26**

(21) Numéro de dépôt: **86401209.1**

(22) Date de dépôt: **05.06.86**

(54) **Chauffe-biberon stérilisateur.**

(30) Priorité: **10.06.85 FR 8508745**

(43) Date de publication de la demande:
**21.01.87 Bulletin 87/4**

(45) Mention de la délivrance du brevet:
**13.09.89 Bulletin 89/37**

(84) Etats contractants désignés:
**AT BE CH DE GB IT LI LU NL SE**

(56) Documents cité:
**CH-A-467 052**
**DE-A-2 136 748**
**DE-A-3 332 172**
**FR-A-907 269**
**US-A-1 562 021**
**US-A-1 806 004**
**US-A-1 946 220**
**US-A-1 994 206**
**US-A-2 480 337**

(73) Titulaire: **THERMOBABY, Société Anonyme, Z.I.
de Kerbois, F-56400 Auray (FR)**

(72) Inventeur: **Cappe, Alain, 7 Chemin de Tal Fetan,
F-56170 Quiberon (FR)**
Inventeur: **Nabet, Claude, 110 av. Aristide Briand,
F-92120 Montrouge (FR)**

(74) Mandataire: **Hasenrader, Hubert, Cabinet BEAU
DE LOMENIE 55, rue d'Amsterdam, F-75008 Paris
(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les appareils électriques destinés au réchauffage des biberons et des petits pots d'aliments pour bébés. Un tel appareil connu par exemple par le document FR-A-907 269 comporte classiquement une cuve ouverte munie d'un dispositif électrique chauffant contrôlé par un thermostat adapté au réchauffage des biberons ou des petits pots la cuve peut être fermée, notamment pour le transport, par un couvercle s'y fixant par des moyens de fixation rapide de manière à former un compartiment pour le biberon.

On connaît d'autre part des stérilisateurs conçus à cette seule fin, permettant de stériliser d'un coup plusieurs biberons (par exemple sept). Ces stérilisateurs exigent d'avoir des biberons en grande quantité, prennent de la place, représentent un investissement supplémentaire et ne sont pas, finalement, d'un usage commode. Beaucoup de parents continuent à stériliser les biberons individuellement, dans une casserole d'eau.

Le but de l'invention est de perfectionner un chauffe-biberon électrique conventionnel, de manière qu'il puisse servir à la stérilisation individuelle des biberons.

A cet effet, dans l'appareil de l'invention:

a)   le couvercle se fixe de façon étanche sur la cuve de manière à former un compartiment fermé pour la stérilisation d'un biberon, et il comporte au moins une soupape.

Par ailleurs, l'appareil de l'invention comporte:

b)   un second dispositif électrique chauffant adapté pour permettre d'atteindre dans le compartiment fermé une température supérieure à 100°C,
c)   un moyen de commande du second dispositif électrique chauffant,
d)   un moyen pour interrompre le second dispositif électrique chauffant quand la stérilisation est accomplie.

Avantageusement, le premier et le second dispositifs électriques chauffants sont constitués par un même collier chauffant entourant la cuve.

Avantageusement, le moyen de commande du second dispositif électrique chauffant est un commutateur permettant de shunter le thermostat contrôlant le premier dispositif électrique chauffant.

Avantageusement, le moyen pour interrompre le second dispositif chauffant est un limiteur de température.

D'autres avantages et caractéristiques de l'invention ressortiront de la description suivante d'un mode préféré de réalisation. Il sera fait référence aux dessins annexés sur lesquels:

- la figure 1 est une vue de côté et en coupe partielle de la structure de l'appareil conforme à l'invention,

- la figure 2 en représente le schéma électrique.

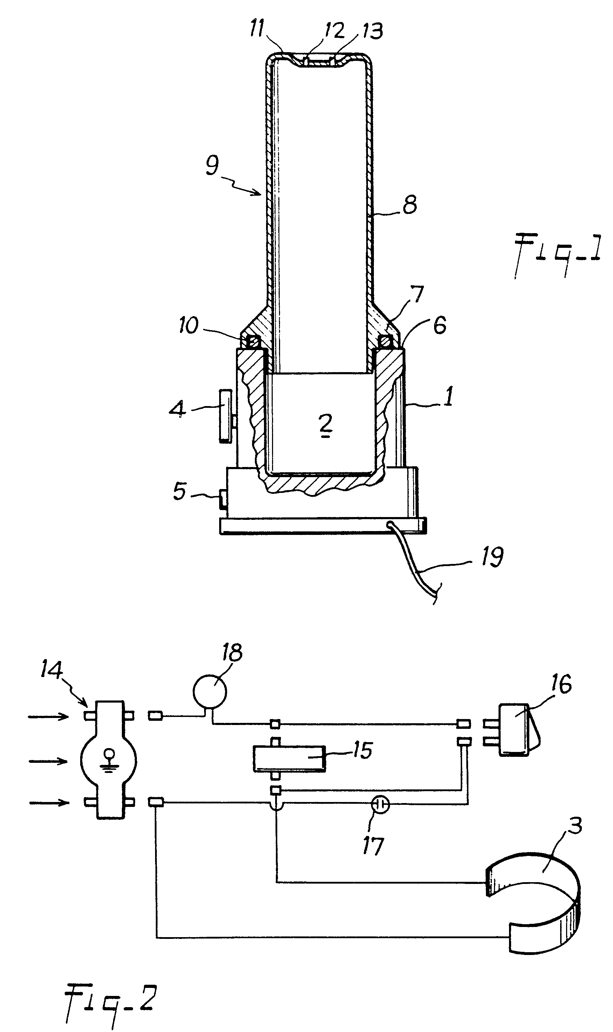

L'appareil de l'invention comporte un socle 1 formant une cuve cylindrique ouverte 2, entourée par un collier chauffant 3 (cf. fig. 2) noyé dans la paroi cylindrique du socle. A l'intérieur du socle sont également prévus des compartiments abritant les organes de fonctionnement électrique de l'appareil, ainsi que les isolations thermiques et électriques nécessaires. Un bouton 4 réglant le thermostat est prévu à l'avant de l'appareil, ainsi qu'un témoin lumineux de fonctionnement 5; un cordon 19 d'alimentation électrique est également prévu.

Le bord supérieur de la cuve 2 forme une couronne d'appui 6, servant de butée à une bride 7 entourant la partie cylindrique 8 du couvercle 9. La bride 7 comporte un logement annulaire enfermant un joint d'étanchéité torique 10. Des moyens de fixation rapide non représentés permettent de solidariser le couvercle 9 au socle 1, en maintenant la bride 7 appuyée sur la couronne d'appui 6 de manière à assurer l'étanchéité.

La partie cylindrique 8 du couvercle pénètre, par son extrémité ouverte, légèrement à l'intérieur de la cuve, et est fermée à son autre extrémité par un fond 11 muni de deux soupapes 12 et 13.

Un panier-râtelier non représenté est prévu pour se positionner dans le compartiment de stérilisation, et supporter un biberon et ses accessoires (tétines, etc.) en vue de la stérilisation.

Le schéma électrique de l'appareil de l'invention est le suivant (cf. fig. 2).

En fonctionnement de réchauffage, le collier de chauffage 3 est alimenté par l'alimentation 14 (220V + terre) via le thermostat 15 à rupture, qui limite la durée de fonctionnement en fonction de la température choisie. Le thermostat est réglé pour qu'on puisse, en position voisine du maximum, réchauffer les petits pots d'aliments pour bébé.

Pour permettre le chauffage nécessaire à la stérilisation, un interrupteur 16 permet d'alimenter le collier de chauffage 3 en shuntant le thermostat 15, qui provoquerait une coupure trop rapide. L'interrupteur 16 peut être extérieur et à commande indépendante, ou bien être commandé par une came fixée au bouton de réglage 4 du thermostat, qui serait alors l'unique organe de commande. Un voyant néon 17 signale le fonctionnement du dispositif de chauffage en mode stérilisation.

Un limiteur de température 18 est placé entre l'alimentation 14 et le collier chauffant 3 pour interrompre son fonctionnement une fois la stérilisation accomplie, comme il sera expliqué plus loin.

Le fonctionnement de l'appareil de l'invention est le suivant.

L'appareil, avec sa cuve 2 ouverte, peut être utilisé de manière classique pour le réchauffage des petits pots pour bébé ou des biberons, grâce au thermostat qui permet d'atteindre une température adéquate.

Lorsqu'il s'agit de stériliser un biberon et ses accessoires, on monte dans la cuve 2 le panier ratelier supportant le biberon et ses accessoires, et, la cuve est remplie d'une quantité d'eau prédéterminée. On recouvre ensuite la cuve 2 du couvercle 9 que l'on fixe de façon étanche.

On commute alors l'interrupteur 16, ce qui permet au collier chauffant 3 de chauffer l'eau, laquelle atteint rapidement (3 à 4 min.) sa température d'ébullition. Le compartiment dans lequel est produite la vapeur étant clos, la pression et la température montent, cette dernière dépassant 100°C ce qui garantit une excellente stérilisation.

La première soupape 12 (par exemple une soupape à clapet taré par un ressort) permet de limiter la surchauffe de la vapeur et la montée excessive en pression du système.

Du fait que la vapeur s'échappe, le niveau d'eau diminue dans la cuve 2. Le limiteur 18 est placé à la partie supérieure de la cuve. Lorsque le niveau d'eau baisse par rapport au collier chauffant, il se produit une augmentation de température de la partie supérieure de la cuve. Dès que le niveau a assez baissé, le limiteur 18 coupe l'alimentation du collier 3, ce qui réalise une temporisation du fonctionnement en stérilisateur. La quantité d'eau prédéterminée à mettre dans la cuve au début de l'opération est calculée en fonction de cet objectif, et peut être reproduite grâce à une mesure pour la verser et/ou un repère dans la cuve.

La deuxième soupape 13 est tarée pour s'ouvrir à un niveau de pression légèrement supérieur à la première et n'intervient que comme sécurité en cas de blocage de la première soupape 12.

Le limiteur 18 est à réenclenchement manuel pour éviter une remise en marche intempestive de l'appareil. Il sert aussi de sécurité dans le cas d'une utilisation sans eau, aussi bien en mode stérilisateur que chauffe-biberon.

## Revendications

1. Appareil électrique de réchauffage et de stérilisation pour biberon, comportant une cuve ouverte (2) de réchauffage munie d'un premier dispositif électrique chauffant (3) contrôlé par un thermostat (15) adapté au réchauffage des biberons, et un couvercle (9) se fixant par des moyens de fixation rapide sur la cuve (2) de manière à former un compartiment fermé pour un biberon caractérisé en ce que:

a) le couvercle (9) se fixe de façon étanche sur la cuve (2) de manière à former un compartiment fermé pour la stérilisation d'un biberon, et comporte au moins une soupape (12),

l'appareil comportant en outre:

b) un second dispositif électrique chauffant (3) adapté pour permettre d'atteindre dans le compartiment fermé une température supérieure à 100°C,

c) un moyen de commande (16) du second dispositif électrique chauffant (3),

d) un moyen (18) pour interrompre le second dispositif électrique chauffant (3) quand la stérilisation est accomplie.

2. Appareil selon la revendication 1, caractérisé en ce que le premier et le second dispositifs électriques chauffants sont constitués par un même collier chauffant (3) entourant la cuve.

3. Appareil selon la revendication 2, caractérisé en ce que le moyen de commande du second dispositif électrique chauffant est un commutateur (16) permettant de shunter le thermostat (15) contrôlant le premier dispositif électrique chauffant (3).

4. Appareil selon l'une quelconque des revendications 1 à 3, caractérisé en ce que le moyen pour interrompre le second dispositif chauffant (3) est un limiteur de température (18).

## Patentansprüche

1. Elektrisches Heiz- und Sterilisiergerät für Saugflaschen mit einem offenen Heizbehälter (2), der mit einer ersten elektrischen Heizvorrichtung (3) versehen ist, die durch einen für die Aufheizung von Saugflaschen geeigneten Thermostat (15) gesteuert wird, und einem Deckel (9), der sich durch Schnellbefestigungsmittel an dem Behälter (2) derart befestigt, um einen geschlossenen Raum für eine Saugflasche zu bilden, dadurch gekennzeichnet, daß

a) der Deckel (9) auf dem Behälter (2) derart dichtend fixiert ist, daß ein geschlossener Raum für die Sterilisation einer Saugflasche gebildet wird, und der wenigstens ein Ventil (12) aufweist, wobei das Gerät zusätzlich aufweist:

b) eine zweite elektrische Vorrichtung (3), die geeignet ist, eine Temperatur höher als 100°C in dem geschlossenen Raum zu erreichen,

c) eine Betätigungseinrichtung (16) der zweiten elektrischen Heizvorrichtung (3),

d) eine Einrichtung (18), um die zweite elektrische Heizvorrichtung (3) zu unterbrechen, wenn die Sterilisation beendet ist.

2. Gerät nach Anspruch 1, dadurch gekennzeichnet, daß die erste und die zweite Heizvorrichtung aus einem gleichen Heizband (3) gebildet sind, das den Behälter umgibt.

3. Gerät nach Anspruch 2, dadurch gekennzeichnet, daß die Betätigungseinrichtung der zweiten elektrischen Heizvorrichtung ein Schalter (16) ist, der erlaubt, den Thermostat (15), der die erste elektrische Heizvorrichtung steuert, in Nebenschluß zu schalten.

4. Gerät nach einem der Ansprüche 1 bis 3, dadurch gekennzeichnet, daß die Einrichtung zum Unterbrechen oder Abschalten der zweiten Heizvorrichtung (3) ein Temperaturbegrenzer (18) ist.

## Claims

1. An electrical apparatus for warming and sterilizing a baby's bottle, comprising an open heating container (2) provided with a first electrical heating device (3) controlled by a thermostat (15) adapted to warm up the bottles, and a lid (9) fixable by instant fixing means on said container (2) so as to form a tightly closed compartment, for a bottle, characterized in that:

a) the lid (9) is hermetically fixed on the container (2) so as to form a closed compartment for sterilizing a bottle, and comprises at least one valve (12), the apparatus further comprising:

b) a second electrical heating device (3) making it possible to reach inside the closed compartment a temperature higher than 100°C,

c) means (16) for controlling the second electrical heating device (3),

d) means (18) for disconnecting the second electrical heating device (3) when sterilization is completed.

2. Apparatus according to claim 1, characterized in that the first and second electrical heating devices are constituted by a single heating collar (3) surrounding the container.

3. Apparatus according to claim 2, characterized in that the means for controlling the second electrical heating device is a switch (16) for shunting the thermostat (15) controlling the first electrical heating device (3).

4. Apparatus according to any one of claims 1 to 3, characterized in that the means for disconnecting the second electrical heating device (3) is a temperature limiter (18).

11  12  13

9

8

$Fig-1$

7

10

6

4

1

5

2

19

14

18

16

15

17

3

$Fiq-2$